# EUROPÄISCHE PATENTSCHRIFT

(11) **EP 0 698 507 B1**
(45) Veröffentlichungstag und Bekanntmachung des Hinweises auf die Patenterteilung: **03.11.1999**
(21) Anmeldenummer: 95110551.9
(22) Anmeldetag: 06.07.1995
(51) Int. Cl.: B60B 1/06, B60B 3/04, B60C 29/02

(54) **Rad für ein Kraftfahrzeug**
Wheel for motor vehicle
Roue pour véhicule à moteur

(30) Priorität: 27.08.1994 DE 4430488
(43) Veröffentlichungstag der Anmeldung: 28.02.1996
(73) Patentinhaber: Dr.Ing.h.c. F. Porsche Aktiengesellschaft, 70435 Stuttgart (DE)
(72) Erfinder: Stach, Jens, D-71735 Eberdingen (DE)

(56) Entgegenhaltungen:
- EP-A- 0 228 670
- EP-A- 0 251 355
- DE-A- 4 103 644
- DE-U- 8 905 057
- PATENT ABSTRACTS OF JAPAN vol. 4, no. 72 (M-013), 27.Mai 1980 & JP 55 036113 A (SUZUKI MOTOR CO.), 13.März 1980,

## Beschreibung

Die Erfindung bezieht sich auf ein Rad für ein Kraftfahrzeug nach dem Oberbegriff des Anspruchs 1.

Aus der DE-41 03 644 A1 ist ein Fahrzeugrad mit einem Reifendruckventil nahe der Radachse bekannt. Eine Luftverbindung vom Ventil zum Reifeninnenraum erfolgt über einen gebohrten Kanal in einer der Radspeichen.

Aufgabe der Erfindung ist es, in einem Hohlspeichen umfassenden Fahrzeugrad ein Reifendruckventil bzw. einen Reifendruckaufnehmer entsprechend den jeweiligen Erfordernissen anzuordnen.

Diese Aufgabe wird erfindungsgemäß durch die kennzeichnenden Merkmale des Anspruchs 1 gelöst. Weitere vorteilhafte Merkmale beinhalten die Unteransprüche.

Die mit der Erfindung hauptsächlich erzielten Vorteile bestehen darin, daß durch die Hohlrippen sowie den ersten und zweiten Ringkanal das Reifendruckventil wahlweise nahe des Radzentrums oder in einem anderen Bereich der Hohlrippen oder Ringkanäle angeordnet werden kann. Hierdurch wird neben einer Verminderung einer Radunwucht eine örtlich gut zugängliche Lage des Ventils geschaffen.

Insbesondere ist das Ventil bei einer ersten Ausführung auf dem Lochkreis der Schraubenbohrungen des Radsterns und bei einer zweiten Ausführung in einer zentrischen Durchgangsöffnung des Rades angeordnet.

Bei der ersten Ausführung ist das Ventil in einer Bohrung zwischen zwei Schraubenbohrungen des Radsternes gehalten. Die das Ventil aufnehmende Bohrung kann über eine Kappe oder dergleichen abgedeckt sein, so daß das Ventil von außen nicht sichtbar und gegen äußere Einflüsse geschützt ist.

Bei der zweiten Ausführung ist das Ventil in der zentrischen Durchgangsöffnung des Rades in einer die Hohlrippen begrenzenden Wand angeordnet. Diese eingebettete Lage ergibt eine nähere örtliche Anordnung zur Radachse und somit eine vorteilige Wirkung hinsichtlich einer Radunwucht und zugleich ist das Ventil geschützt gegen äußere Einflüsse angeordnet. Zusätzlich kann die Durchgangsöffnung des Rades über einen zentrischen Deckel gesichert werden.

Ausführungsbeispiele der Erfindung sind in den Zeichnungen dargestellt und werden im folgenden näher beschrieben.

Es zeigen:
- Fig. 1: eine teilweise Draufsicht auf einen Radstern eines Fahrzeugrades,
- Fig. 2: einen Schnitt durch das Rad nach der Linie II-II der Fig. 1 mit einem an der Radaußenseite angeordneten Ventil, und
- Fig. 3: eine Anordnung des Ventils in einer zentrischen Durchgangsöffnung des Rades.

Das Rad 1 umfaßt im wesentlichen einen Radstern 2 mit Hohlrippen 3 und einem mit dem Radstern einstückigen oder verbundenen Felgenring 4. Zwischen dem Radstern 2 und dem Felgenring 4 ist im Bereich 5 des Felgenhorns ein erster Ringkanal 6 ausgebildet, in den die dem Horn zugerichteten Lufträume H der Hohlrippen 3 jeweils einmünden. Desweiteren ist ein zweiter Ringkanal 7 konzentrisch zur Radachse 8 vorgesehen, in den die der Radachse 8 zugerichteten Lufträume H der Hohlrippen 3 einmünden. Im ersten Ringkanal 6 sind zum Reifeninnenraum hin eine oder mehrere Luftöffnungen 9 vorgesehen, so daß durch die Verbindung der Lufträume H der Rippen 3 mit den Hohlräumen der beiden Ringkanäle 6 und 7 eine durchgehende Luftführung vom zweiten Ringkanal 7 zum Reifeninnenraum 20 besteht.

Im Bereich des zweiten Ringkanals 7 ist ein Reifendruckventil 10 angeordnet, welches eine Reifenbefüllung mit Luft von der Radmitte aus in einfacher Weise ermöglicht.

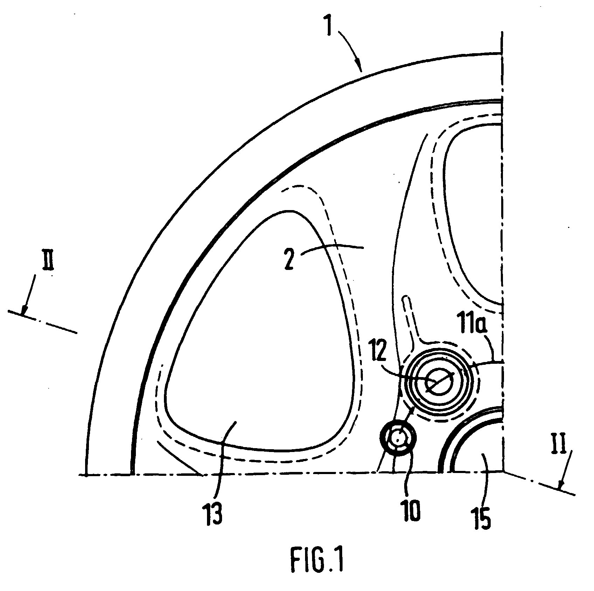

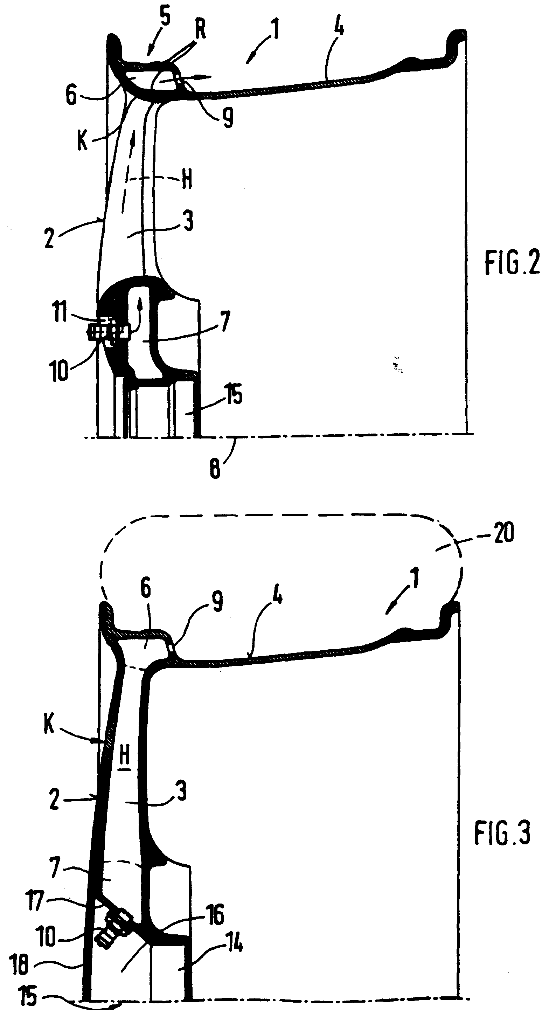

In einer ersten Ausführung gemäß Fig. 2 ist das Ventil 10 an der Außenseite des Rades 1 im Radstern 2 beispielsweise in einer Bohrung 11 gehalten. Wie Fig 1 näher zeigt, ist das Ventil 10 auf einem Lochkreis 11a für die Schraubenbohrungen 12 des Rades 1 angeordnet, insbesondere ist das Ventil zwischen zwei Schraubenbohrungen mittig vorgesehen. Das Ventil 10 kann aber auch an einer anderen Stelle des Felgensterns 2, beispielsweise in der Luftöffnung 13, gehalten sein.

Das Ventil 10 erstreckt sich vorzugsweise achsparallel zur Radachse 8 und kann in der Bohrung 11 mittels eines Deckels oder dergleichen abgedeckt sein.

Nach einer weiteren Ausführung gemäß Fig. 3 weist die Durchgangsöffnung 15 des Rades einen zylindrischen ersten Abschnitt 14 und einen zur Radaußenseite hin weisenden anschließenden zweiten kegeligen Abschnitt 16 auf. Dieser Abschnitt 16 wird teilweise begrenzt von Stirnwänden 17 der Hohlrippen 3, wobei in einer Stirnwand 17 das Ventil 10 gehalten wird. Dies ragt unter einem spitzen Winkel zur Radachse 8 in die Durchgangsöffnung 15 und steht nicht über die Außenkontur K des Radsterns 2 hinaus. Die Öffnung 15 kann von einem Deckel 18 abgeschlossen sein, so daß das Ventil 10 sicher, geschützt und schwer für Unbefugte zugänglich angeordnet ist.

Die Ausbildung des Rades 1 mit Hohlrippen 3 und Ringräumen 6, 7 bietet neben der Möglichkeit der zur Radachse nahen Anordnung des Ventils 10 auch den Vorteil, daß eine kombinierte Anordnung des Ventils 10 mit einem Reifendruckaufnehmer vorgesehen werden kann. Es ist aber auch möglich, den Reifendruckaufnehmer separat zum Ventil nahe des zweiten Ringkanals 7 anzuordnen oder diesen Reifendruckaufnehmer in der Hohlrippe oder dem ersten Ringkanal 6anzuordnen.

Das Rad 1 weist vorzugsweise einen gegossenen Radstern 2 auf, der mit dem Felgenring 4 über eine Reibschweißung R im Bereich des oberen, ersten Ringkanals 6 verbunden wird. Diese Verbindungsart ermöglicht in einfacher Weise eine weitestgehend freie Gestaltung der untereinander verbundenen Lutträume vom inneren, zweiten Ringkanal 7 über die Hohlrippen 3 zum ersten Ringkanal 6 und von hier über mindestens eine Öffnung 9 in den Reifeninnenraum 20. Durch eine solche Ausbildung eines Rades kann die Anordnung des Ventils 10 bzw. die Anordnung eines separaten oder mit dem Ventil kombinierten Druckaufnehmers frei unter Berücksichtigung der erzielten technischen und ästhetischen Vorteile gewählt werden.

## Patentansprüche

1. Rad für ein Kraftfahrzeug mit einem Hohlrippen (3) umfassenden Radstern (2), wobei Lufträume (H) der Hohlrippen in einen vom Radstern und einem felgenring (4) gebildeten ersten Ringkanal (6) und einen konzentrisch zur Radachse (8) angeordneten zweiten Ringkanal (7) einmünden, **dadurch gekennzeichnet**, daß im Bereich des zweiten Ringkanals (7) ein Reifendruckventil (10) angeordnet ist und die Hohlrippen (3) zur Luftführung in den Reifeninnenraum (20) mit mindestens einer Luftöffnung (9) im ersten Ringkanal (6) ausgebildet sind.

2. Rad nach Anspruch 1, **dadurch gekennzeichnet**, daß das Ventil (10) benachbart von Schraubenbohrungen (12) des Radsterns (2) angeordnet ist.

3. Rad nach Anspruch 1, **dadurch gekennzeichnet**, daß das Ventil (10) auf einem Lochkreis (11a) der Schraubenbohrungen (12) im Radstern (2) angeordnet ist.

4. Rad nach den Ansprüchen 1,2 oder 3, **dadurch gekennzeichnet**, daß das Ventil (10) in einer Bohrung (11) des Radsterns (2) nahezu eingebettet gehalten ist und eine achsparallele Ausrichtung zur Radachse (8) aufweist.

5. Rad nach Anspruch 1 oder einem der vorhergehenden Ansprüche, **dadurch gekennzeichnet**, daß das Ventil (10) verdeckt in einer die Hohlrippe (3) zur zentrischen Felgenöffnung (15) begrenzenden Wand (17) angeordnet ist und die Wand (17) in einem kegeligen Abschnitt (16) der zentrischen Felgenöffnung (5) vorgesehen ist, an den sich ein zylindrischer Abschnitt (14) anschließt.

6. Rad nach Anspruch 5, **dadurch gekennzeichnet**, daß der kegelige Abschnitt (16) über einen Deckel (18) zur Radaußenseite hin abgeschlossen ist.

7. Rad nach Anspruch 1 oder einem der vorhergehenden Ansprüche, **dadurch gekennzeichnet**, daß das Ventil (10) unter einem spitzen Winkel zur Radachse (8) in der Hohlrippen-Wand (17) angeordnet ist.

8. Rad nach Anspruch 1 oder einem der vorhergehenden Ansprüche, **dadurch gekennzeichnet**, daß das Ventil (10) mit einem Reifendruckaufnehmer verbunden und dem zweiten Ringkanal (7) zugeordnet ist.

9. Rad mit einem mehrere Hohlrippen (3) umfassenden Radstern (2), der im Bereich des Felgenbettes über eine Reibschweißung mit einem Felgenring verbunden wird, wobei der Radstern an der Innenseite mindestens zwei als Kreisringe umlaufende ebene Schweißflächen aufweist, die korrespondierend zu weiteren gegenüberstehenden ebenen Schweißflächen des Felgenringes angeordnet sind, **dadurch gekennzeichnet**, daß im Bereich der Radnabe ein zweiter Ringkanal (7) gebildet ist, in den Lufträume (H) der Hohlrippen (3) einmünden und die Hohlrippen (3) zur Luftführung in den Reifeninnenraum (20) durch mindestens eine Luftöffnung (9) in einem ersten Ringkanal (6) ausgebildet sind.

## Claims

1. A wheel for a motor vehicle with a wheel spider (2) comprising hollow ribs (2), wherein air spaces (**H**) of the hollow ribs open into a first annular duct (6) formed by the wheel spider and a rim ring (4) and a second annular duct (7) arranged concentrically to the wheel axis (8), **characterized in that** a tyre-pressure valve (10) is arranged in the region of the second annular duct (7) and the hollow ribs (3) are formed with at least one air opening (9) in the first annular duct (6) in order to guide air into the inner space (20) of the tyre.

2. A wheel according to Claim 1, **characterized in that** the valve (10) is arranged adjacent to bolt bores (12) in the wheel spider (2).

3. A wheel according to Claim 1, **characterized in that** the valve (10) is arranged on a bolt-hole circle (11a) of the bolt bores (12) in the wheel spider (2).

4. A wheel according to Claim 1, 2 or 3, **characterized in that** the valve (10) is held virtually embedded in a bore (11) in the wheel spider (2) and has an axially parallel orientation with respect to the wheel axis (8).

5. A wheel according to Claim 1 or one of the preceding Claims, **characterized in that** the valve (10) is arranged covered in a wall (17) bounding the hollow rib (3) with respect to the central rim opening (15), and the wall (17) is provided in a tapered portion (16) of the central rim opening (5) [*sic* - *recte* (15)] which is adjoined by a cylindrical portion (14).

6. A wheel according to Claim 5, **characterized in that** the tapered portion (16) is closed off from the outside of the wheel by way of a cover (18).

7. A wheel according to Claim 1 or one of the preceding Claims, **characterized in that** the valve (10) is arranged in the hollow-rib wall (17) at an acute angle to the wheel axis (8).

8. A wheel according to Claim 1 or one of the preceding Claims, **characterized in that** the valve (10) is connected to a tyre-pressure pick-up and is associated with the second annular duct (7).

9. A wheel with a wheel spider (2) comprising a plurality of hollow ribs (3) and connected in the region of the rim base to a rim ring by way of a friction weld, wherein the inside of the wheel spider is provided with at least two flat weld faces extending as circular rings and arranged in a manner corresponding to further opposed flat weld faces of the rim ring, **characterized in that** a second annular duct (7), into which air spaces (**H**) of the hollow ribs (3) open, is formed in the region of the wheel hub, and the hollow ribs (3) are formed by at least one air opening (9) in a first annular duct (6) in order to guide air into the inner space (20) of the tyre.

## Revendications

1. Roue pour un véhicule automobile comportant une étoile de roue (2) comprenant des nervures creuses (3), des espaces à air (H) des nervures creuses débouchant dans un premier canal annulaire (6), formé par l'étoile de roue et par un anneau de jante (4), et dans un deuxième canal annulaire (7) disposé concentriquement à l'axe (8) de la roue, caractérisée en ce que dans la région du deuxième canal annulaire (7) est disposée une valve (10) de pression du pneu et les nervures creuses (3) présentent un orifice d'air (9) dans le premier canal annulaire (6), pour le guidage de l'air dans la chambre intérieure (20) du pneu.

2. Roue selon la revendication 1, caractérisée en ce que la valve (10) est disposée au voisinage de trous de vis (12) de l'étoile de roue (2).

3. Roue selon la revendication 1, caractérisée en ce que la valve (10) est disposée sur un cercle perforé (11a) des trous de vis (12) dans l'étoile de roue (2).

4. Roue selon les revendications 1, 2 ou 3, caractérisée en ce que la valve (10) est maintenue pratiquement moyée dans un perçage (11) dans l'étoile de roue (2) et présente une orientation dont l'axe est parallèle à l'axe (8) de la roue.

5. Roue selon la revendication 1 ou l'une des revendications précédentes, caractérisée en ce que la valve (10) est disposée dissimulée dans une paroi (17) qui limite la nervure creuse (3) vers l'ouverture de jante centrée (15) et la paroi (17) est prévue dans une partie conique (16) de l'ouverture de jante centrée (5), à laquelle fait suite une partie cylindrique (14).

6. Roue selon la revendication 5, caractérisée en ce que la partie conique (16) est fermée vers le côté extérieur de la roue par un couvercle (18).

7. Roue selon la revendication 1 ou l'une des revendications précédentes, caractérisée en ce que la valve (10) est disposée dans la paroi (17) des nervures creuses, sous un angle aigu par rapport à l'axe (8) de la roue.

8. Roue selon la revendication 1 ou l'une des revendications précédentes, caractérisée en ce que la valve (10) est reliée à un capteur de pression du pneu et est affectée au deuxième canal annulaire (7).

9. Roue comportant une étoile de roue (2), comprenant plusieurs nervures creuses (3), laquelle est reliée, dans la région de la base de la jante, à un anneau de jante, par une soudure à friction, l'étoile de roue présentant sur le côté intérieur au moins deux surfaces de soudage planes qui s'étendent périphériquement à la manière d'anneaux circulaires et qui sont disposées en correspondance avec d'autres surfaces de soudage planes opposées de l'anneau de jante, caractérisée en ce que dans la région du moyeu de la roue est formé un deuxième canal annulaire 7, dans lequel débouchent des espaces à air (H) des nervures creuses (3) et en ce que pour le guidage d'air dans la chambre intérieure (20) du pneu, les nervures creuses (3) présentent au moins un orifice d'air (9) dans un premier canal annulaire (6).
